Europäisches Patentamt

(19) European Patent Office

Office européen des brevets

(11) Publication number: **0 158 767**
**A2**

(12) # EUROPEAN PATENT APPLICATION

(21) Application number: **85100044.8**

(22) Date of filing: **02.01.85**

(51) Int. Cl.⁴: **H 04 M 11/08**

(30) Priority: **30.03.84 US 595211**

(43) Date of publication of application:
**23.10.85 Bulletin 85/43**

(84) Designated Contracting States:
**BE DE FR GB**

(71) Applicant: **WANG LABORATORIES INC.**
**One Industrial Avenue**
**Lowell, MA 01851(US)**

(72) Inventor: **Sturgis, Samuel P.**
**86 Fisher Street**
**Medway, MA 02053(US)**

(72) Inventor: **Haggerty, William T.**
**622 Chicopee Row**
**Groton, MA 10450(US)**

(72) Inventor: **Sangster, Barbara C.**
**9 Bellevue Road**
**Wellesley Hills, MA 02181(US)**

(74) Representative: **Behrens, Dieter, Dr.-Ing. et al,**
**Patentanwälte WUESTHOFF-V.**
**PECHMANN-BEHRENS-GOETZ Schweigerstrasse 2**
**D-8000 München 90(DE)**

(54) Videotex decoder apparatus.

(57) A videotex decoder apparatus which, in various aspects,
displays a status line to indicate when connect charges are
occurring; overlays menus over displayed videotex frames
with portions of the displayed frames remaining visible;
provides easily called log-on procedures; retrieves remote
information frames by user-specified keyword names; prints
information frames in selectable different overall sizes;
provides selectable different character sets for display; is
table-driven; and uses an added frame header on stored
frames to indicate the videotex protocol for decoding the
frames.

EP 0 158 767 A2

PATENTANWÄLTE

# WUESTHOFF - v. PECHMANN - BEHRENS - GOETZ

## EUROPEAN PATENT ATTORNEYS

**0158767**

EP-58 919

Wang Laboratories, Inc.

DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070
TELEFAX: VIA (089) 2 71 60 63 (III)

## Videotex decoder apparatus

This invention relates to videotex systems more particularly to an videotex decoder apparatus.

In typical videotex systems, textual and graphic information from a variety of sources (such as newspapers, retailers, or banks) is made available by a videotex supplier to a large number of subscribers via interactive two-way communication over the switched telephone network.

The videotex supplier electronically stores the information supplied by the different sources in the form of hundreds of thounsands of pages (frames) each representing a collection (arranged, for example, in rows and columns) of alphanumeric and graphic characters to be displayed on a cathode ray tube (CRT) at the subscriber's location. Each frame is sent to the subscriber as a stream of encoded bytes. Some of the bytes identify the particular characters to be displayed. Other bytes are essentially instructions about the attributes of the displayed frame, for example, the size of a particular character or the background color for a particular line of characters. The characters and attribute information are translated into the encoded bytes in accordance with a set of rules (protocol) established by each supplier.

In addition to a CRT, each subscriber has a decoder for converting the received encoded bytes back to the displayable alphanumeric or graphic characters and attribute instructions, and a keyboard with which the subscriber can tell

- 1 -

the videotex supplier what frames to send to the subscriber,
and can respond to questions posed in particular frames.

Different videotex protocols have been developed in
different countries, for example Prestel in the United Kingdom,
Telidon in Canada, and NAPLPS in the United States. A
description of the Prestel system is set forth in Hudson,
"Prestel: The Basis of an Evolving Videotex System", (BYTE,
July, 1983, p. 61), and in "Prestel Terminal Specification"
updated through 8/1/83, available from Prestel Headquarters,
Prestel 435, Telephone House, Temple Avenue, London EC4Y OHL,
England, both incorporated herein by reference.

Some videotex decoders allow the subscriber to switch
between viewing frames being supplied over the telephone line
and frames which have been stored locally. Frames explaining
to the subscriber how to proceed may also be displayed.

To comply with the requirements and to enable easier handling
the invention, as defined in the appendent claims provides in
one aspect, apparatus for locally displaying frames of digital
information received from a central supplier, including a port
connectable to the central supplier for receiving at least one
of the information frames from the central supplier, a display
device for locally displaying at least one of the information
frames received from the central supplier, a storage device for
locally storing, after it has been displayed, as a stored frame
for later redisplay, at least one of the information frames

- 2 -

received from the central supplier, and a processor connected to be responsive to the port and the storage device and comprising means for displaying, while the port is connected to the central supplier, an indication that the port is connected.

In preferred embodiments, the means for displaying is further arranged to display an indication of the expense entailed in the connection, in particular, the time which has elapsed during the period since the port was most recently connected; the indication of expense is displayed on the display device simultaneously while an information frame is being displayed; the processor also includes means for enabling the user to selectively either display or not display the indication that the port is connected; the means for displaying is further arranged to display an indication of whether the information frame being displayed is a stored frame from the storage device; the processor further includes means for enabling the user to selectively either display or not display the indication of whether the information frame being displayed is a stored frame from the storage device; the means for displaying is further arranged to display, while the port is unconnected to the central supplier, an indication that the port is unconnected; and the apparatus includes a data entry device for enabling the entry of data into the apparatus, the data including commands representing actions to be taken with respect to the information frames, and the processor includes means for delivering to the display device at least one menu frame for visually indicating possible actions which may be taken with respect to the information frames, including the actions of switching back and forth between displaying the information frames as they are received from the supplier, and displaying stored frames from the storage device, and the processor also includes means responsive to the data entry device for accepting and executing entered commands corresponding to the possible actions.

Displaying the status line (i.e., the indications that the port is connected, and whether or not the displayed frame is from the local storage device) reminds the user of subscriber fees and telephone tolls being incurred while connected to the videotex supplier.

In another aspect, the invention features apparatus for locally displaying frames of digital information received from a videotex supplier, including a port connectable to the central supplier for receiving at least one of the information frames from the supplier, a display device for displaying at least one of the information frames received from the supplier, and a processor comprising means for delivering to the display device at least one menu frame for visually indicating possible actions which may be taken while an information frame received from the supplier is being displayed on the display device, and means for visually overlaying the menu frame over the displayed

- 4 -

information frame so that at least a portion of the displayed information frame is displayed simultaneously with the menu frame.

In preferred embodiments, the processor includes a data entry device for enabling the entry of data into the apparatus, including commands to cause the processor to selectively either overlay the menu over the displayed frame, or to display the menu without any underlying display of any portion of the previously displayed information frame; the possible actions include actions to be taken with respect to the underlying information frame; and one action is the storage of the underlying displayed information frame.

The overlay enables the user to observe at least part of the current frame while acting on a particular menu.

In another aspect, the invention features apparatus for obtaining access via a switched communications network to a central supplier of frames of digital information for obtaining frames to be visually displayed locally, comprising means for delivering to the central supplier via the network stored coded information required by the central supplier as a condition to allowing access to the central supplier, a display device for displaying the frames of digital information, a data entry device for enabling the entry of data into the apparatus, including commands, and a processor comprising menu means for sending to the display device a menu frame identifying the

- 5 -

central supplier as being accessible, and log-on means responsive to the data entry device for accepting and executing an entered command to obtain access to the supplier, by triggering the means for delivering to send the coded information.

In preferred embodiments, the coded information delivered to the supplier includes a subscriber identifier; means for holding protocol information about a protocol specified by the supplier and governing the information frames of the supplier; each information frame comprises a collection of multiple-bit bytes and the means for holding is arranged to hold protocol information which includes the number of bits in each byte; the means for holding is arranged to hold protocol information which includes a table of commands each associated with an instruction specified by the supplier for retrieving information frames from the supplier, each command corresponding to a key on the data entry device, and the processor further includes means responsive to the data entry device for sending to the supplier in response to the pressing of a key, the instruction associated with the command corresponding to the pressed key; the specified instructions include instructions to retrieve the prior information frame, to repeat the presently retrieved information frame, to log off, and to go to the home frame; there are a plurality of central suppliers each requiring its own coded information; the apparatus includes means for specifying and updating, by data entered through the data entry device, the coded information to be delivered to the supplier when access to the supplier is commanded; the processor includes means for specifying and updating the protocol information held in the means for holding; and the menu sent by the menu means identifies at least a plurality of the suppliers, and the log-on means is responsive to the data entry device for accepting and executing an entered command to obtain access to one of the suppliers by triggering the means for delivering to send to that one supplier the coded information required by it.

The user thus can easily, quickly, and accurately log on to the videotex supplier's system.

In another aspect, the invention features apparatus for retrieving selected frames of information from a central videotex supplier of the information frames, each information frame having an associated unique identifier assigned by the supplier for retrieving the frame, the apparatus comprising a display device for displaying the information frames, storage means for storing the identifier and a unique keyword selected by the operator and associated with the identifier, menu means for displaying on the display device a menu frame containing the keyword, data entry means for entering into the apparatus a request for the retrieval of a selected information frame by moving a cursor to the keyword associated with the selected information frame, and a processor responsive to the data entry means for retrieving the information frame in response to the entry of the request by transmitting the associated identifier to the supplier.

In preferred embodiments, the data entry means is further arranged for entering the request by typing in the keyword; and the processor comprises means for enabling specification and updating of the keywords appearing on the menu frame and the identifier associated with each keyword by commands entered through the data entry device.

The user can easily and quickly retrieve particular frames, e.g., a weather forecast, from the videotex supplier using an easy to remember keyword.

In another aspect, the invention features apparatus for locally storing frames of digital information received from a central videotex supplier, including a port connectable to the central supplier for receiving at least one of the information frames from the central supplier, a display device for locally displaying at least one of the information frames received from the central supplier, a storage device for locally storing, after it has been displayed, as a stored frame for later redisplay, at least one of the information frames received from the central supplier, a data entry device for enabling the entry of data into the apparatus, and a processor comprising means for accepting from the data entry device a

- 8 -

name specified by the subscriber to be associated with a particular displayed information frame, means for storing the particular information frame in the storage device together with the associated name, and means for retrieving the particular information frame from the storage device in response to entry through the data entry device of a command corresponding to the name specified for that frame.

In preferred embodiments, the processor also includes means for grouping information frames into directories, and means for accepting from the data entry device commands designating the directory in which a particular displayed frame is to be stored; there are a plurality of central videotex suppliers and the processor further includes means for accepting from the data entry device commands for storing in a single directory frames received from different suppliers; the processor also includes means for displaying on the display device a menu listing by name the information frames stored in a given directory, and means for accepting from the data entry device a command corresponding to the name of an information frame included in the menu for retrieval from the directory; the command is entered by steps which include moving a cursor to the name of the information frame on the menu; and the command is entered by steps which include typing the name of the information frame on the data entry device.

In another aspect, the invention features apparatus for printing frames of digital information received from a central videotex supplier, comprising a port connectable to the central supplier for receiving at least one of the information frames from the central supplier, a printing device for locally printing at least one of the information frames received from the central supplier, and a processor comprising means for delivering to the printer digital information corresponding to an information frame to be printed, and means for configuring the digital information to cause the printed information frame to be of a selectable overall size.

In preferred embodiments, there is a data entry device for enabling the entry of data into the apparatus, and the processor further comprises means for accepting from the data entry device commands corresponding to the different selectable overall sizes.

The user can easily choose different overall sizes of the printout.

In another aspect, the invention features apparatus for processing frames of information received from a central videotex supplier, different information frames comprising characters intended to be displayed by means of different character sets, the apparatus comprising a port connectable to the videotex supplier for receiving the information frames, a display device for displaying the received information frames, a storage device for storing character font information corresponding to the different character sets, a data entry device for entering data into the apparatus, and a processor comprising means for accepting from the data entry device commands each corresponding to the display of information frames according to one of the different character sets, and means for executing a command by reference to the stored font information corresponding to the character set specified by that command.

In preferred embodiments, the character sets include an English character set and a German character set.

Different language fonts thus can be handled automatically.

In another aspect, the invention features apparatus for locally decoding a stream of bytes representing a frame of information received from a videotex supplier, comprising means for receiving each byte in turn for decoding, means for storing a table of entries each indicating what action is to be performed with respect to each byte based on the identity of the byte and on the current state of the decoder, and means for decoding each byte by finding the entry in the table corresponding to the action to be performed and thereafter performing that action.

The table-driven decoder is fast and flexible.

In another aspect, the invention features means for updating the current state of the decoder, after each byte is

- 11 -

decoded, in accordance with the current state and the identity of the decoded byte.

In another aspect, the invention features apparatus for locally processing frames of information received from central videotex suppliers, different frames being encoded in accordance with different protocols, including means for locally storing the information frames, means for locally displaying the frames, means for decoding the locally stored frames before they are displayed, and means for tagging each stored frame with a header indicating the protocol used for encoded the frame, the means for decoding being arranged to decode each frame in accordance with the protocol indicated by the header of the frame. Tagging permits proper decoding of various different frames from different suppliers using the proper protocols.

Other advantages and features will become apparent from the following description of the preferred embodiment, and from the claims.

### Description of the Preferred Embodiment

We first briefly describe the drawings.

### Drawings

Fig. 1 is a block diagram of a videotex system.

Fig. 2 is a block diagram of the subscriber's equipment of Fig. 1.

Figs. 3a through 3dd, and 3ii are menus for display on the display device of Fig. 2.

Figs. 3ee through 3ii are messages for display on the display device of Fig. 2.

Fig. 3kk is a display of a frame overlaid by a menu.

Fig. 4 is a representative help frame for display on the display device of Fig. 2.

Figs. 5a, 5b are status lines for display on the display device of Fig. 2.

Fig. 6 is a flow diagram of the operation of the decoder module of Fig. 2.

Figs. 7a, 7b, 7c, and 7d are flow diagrams of the operation of the control module of Fig. 2.

Structure and Operation

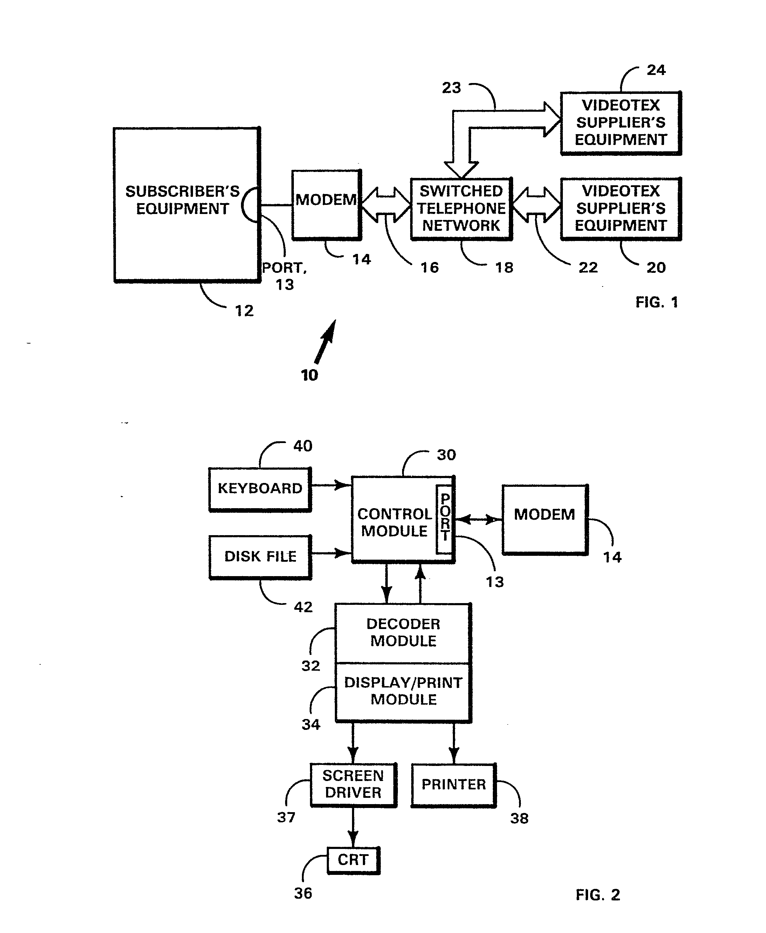

Referring to Fig. 1, in videotex system 10, the subscriber's equipment 12 is connected through port 13 and via an asynchronous modem 14 (with a CCITT V.24/RS-232-compatible interface) and two-way channel 16 to the switched telephone network 18. The equipment (e.g., 20, 24) of different videotex suppliers is also connected, via two-way channels 22, 23, to the switched telephone network 18.

Channels 16, 22, 23 and the switched telephone network 18 enable relatively high-speed (e.g., 1200 bits per second) communication of streams of encoded bytes representing frames of information from a supplier's equipment 20, 24 to the subscriber's equipment 12 and relatively low-speed

- 13 -

communication (e.g. 75 bits per second) of data representing requests and responses from subscriber's equipment 12 to supplier's equipment 20, 24. The communication rate can be the same in either direction, e.g., 2400 bits per second for both sending and receiving.

Referring to Fig. 2, subscriber's equipment 12 includes a control module 30 connected (via port 13) to modem 14, and to decoder and display/print modules 32, 34. Decoder and display/print modules 32, 34 are connected through screen driver 37 to an industry standard red, green, blue, color CRT 36 and to a printer 38 (Wang Matrix Printer PC-PM010). Control module 30 is also connected to keyboard 40 (a data entry device), and to disk file 42 (Wang diskette drive with 360 kilobytes storage capacity or a Wang Winchester drive). Control, decoder, and display/print modules 30, 32, 34 comprise a processor 35 which is implemented as a Wang Personal Computer (PC-001) with 128 kilobytes of memory, an asynchronous interface card for interaction with the port, an MS/DOS operating system version 2.01, BIOS version 1.21, and Wang Videotex decoder software release 1.0. The Wang Personal Computer is described in United States patent application serial number 440,668, filed November 10, 1982, An Wang et al., Management Communications Terminal, incorporated herein by reference.

Control module 30 manages the operation of the subscriber's equipment, accepts the received stream of encoded bytes for each frame from modem 14, temporarily stores the frame in a buffer provided in decoder module 32, directs the decoder module 32 to decode the stored frame, directs the display module 34 (which, in turn controls screen driver 37, a Wang Industry Standard Monitor/Graphics Card, type PC-PM003) to display the decoded characters on CRT 36, directs when the printer 38 is to print the decoded characters, receives and decodes the subscriber's requests and responses from keyboard 40, and as appropriate either acts upon them or encodes them in accordance with the proper protocol and delivers them to modem 14 for transmission to the appropriate videotex supplier.

Decoder module 32, when instructed to do so by control module 30, decodes the encoded bytes of a frame stored in disk file 42 and delivers the decoded characters and attribute instructions to display/print module 34 for display on CRT 36.

Display/print module 34 either delivers a frame of bits to screen driver 37, or a stream of groups of bits, each corresponding to a character, to printer 38. Screen driver 37 uses a bit-map technique to drive CRT 36 to display the frame characters, and includes a screen buffer having storage locations corresponding to each screen location.

In general, the subscriber's equipment 12 is arranged to enable the subscriber to work both with frames currently being delivered from the videotex supplier and frames which

- 15 -

were previously received from a supplier, displayed, and then stored locally in disk file 42. Frames being currently delivered from a supplier are immediately displayed. The subscriber can interactively respond to options offered in such a displayed frame, or request other frames, by keying in the proper commands which are immediately transmitted back to the videotex supplier. Currently displayed frames can also be given names by the subscriber and stored (e.g., in organized groups) in directories established in disk file 42, for later retrieval and display.

In addition to displaying information frames, the subscriber's equipment also can display stored menus which describe options which can be chosen by the subscriber using the appropriate keys on keyboard 40. Help screens may also be displayed to provide information to a subscriber who is confused about how to proceed.

The system operates in either of two modes selected by the subscriber, unconnected or connected. In the connected mode, the subscriber's equipment is attached through modem 14 and the switched telephone network to a videotex supplier. Operating in the connected mode typically entails telephone toll charges and subscriber fees. In the connected mode, the subscriber may work either with frames being supplied from the videotex supplier or with frames previously stored. In the unconnected mode, there is no connection to a videotex supplier and the subscriber may only print or display locally stored frames.

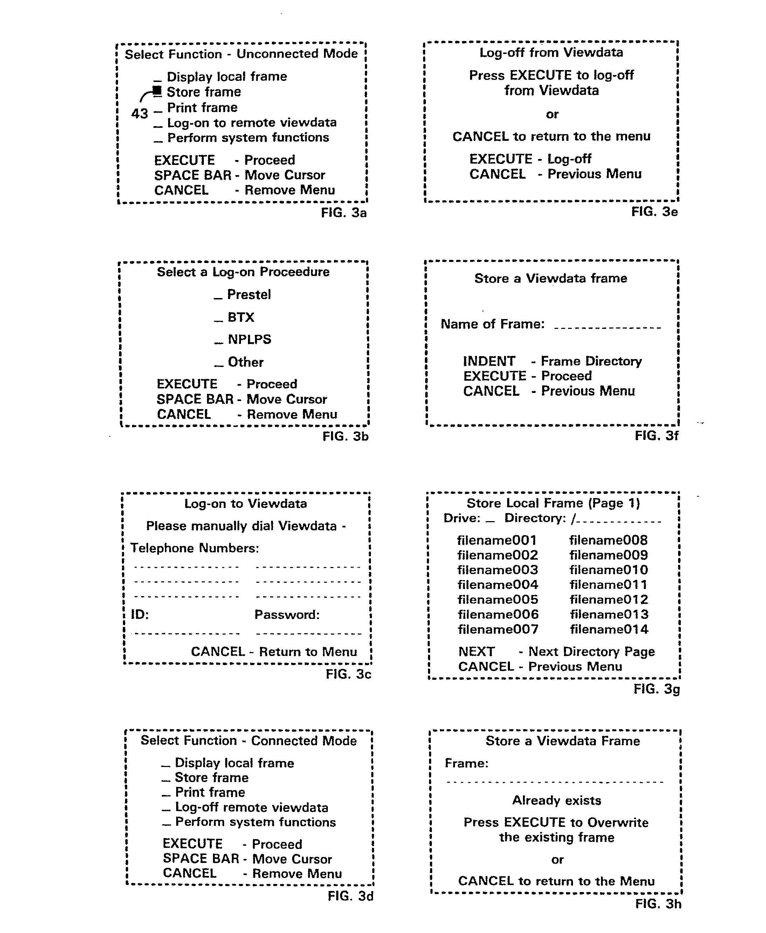

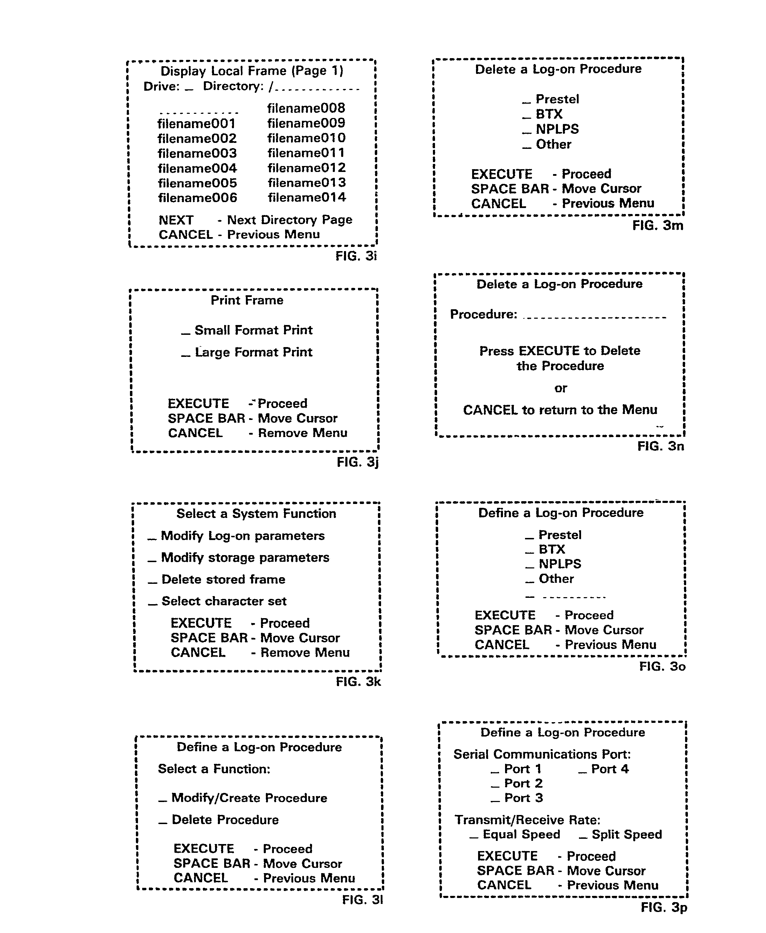

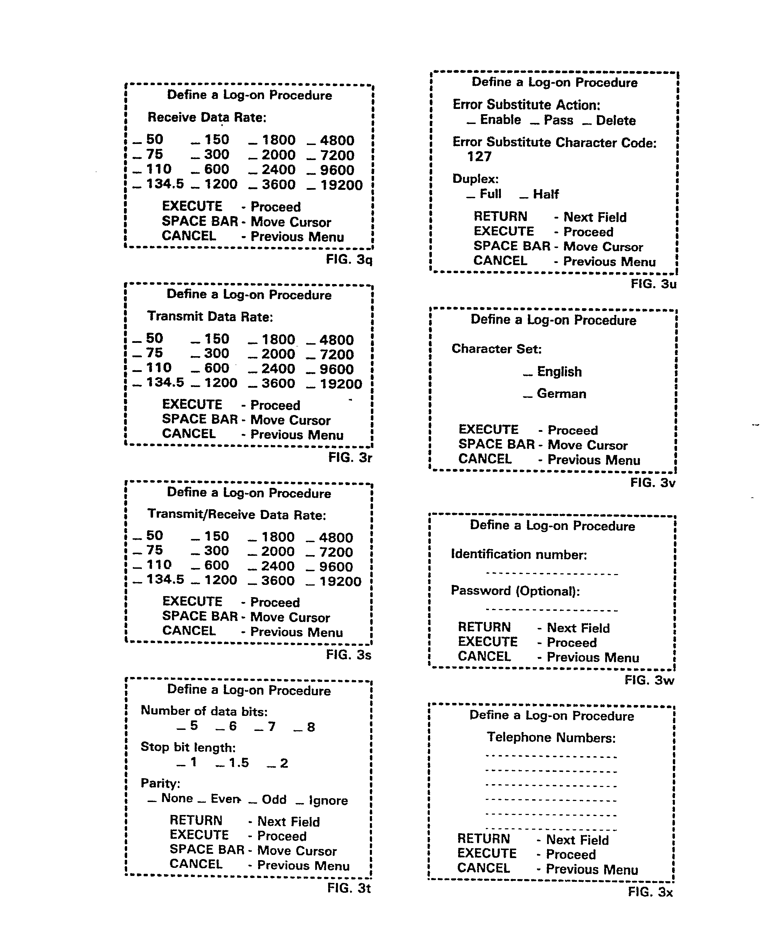

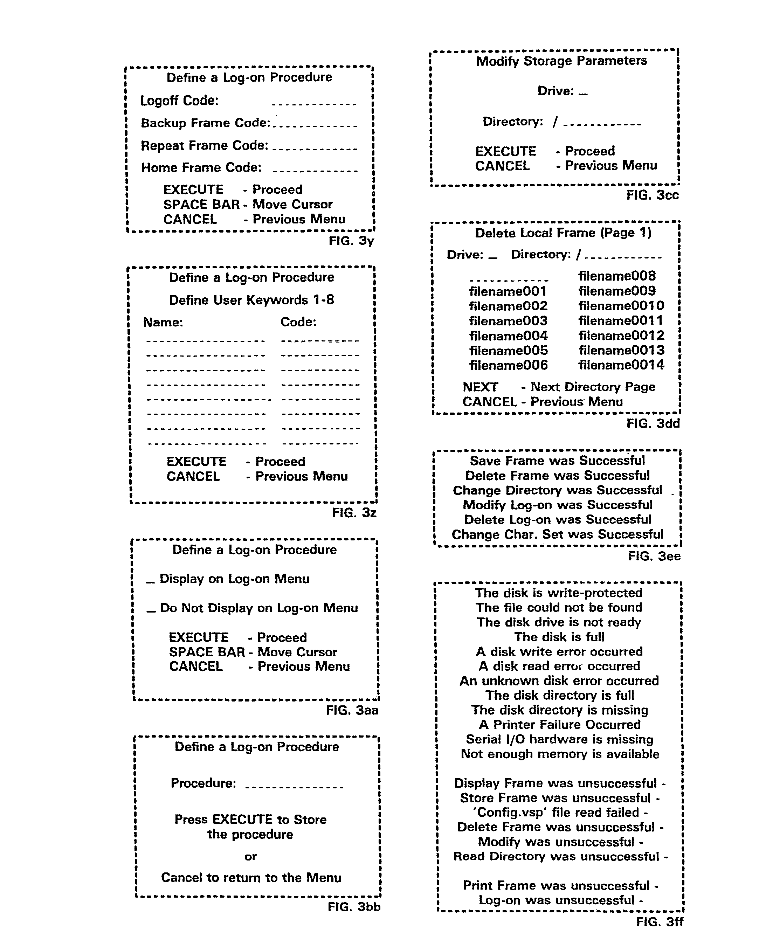

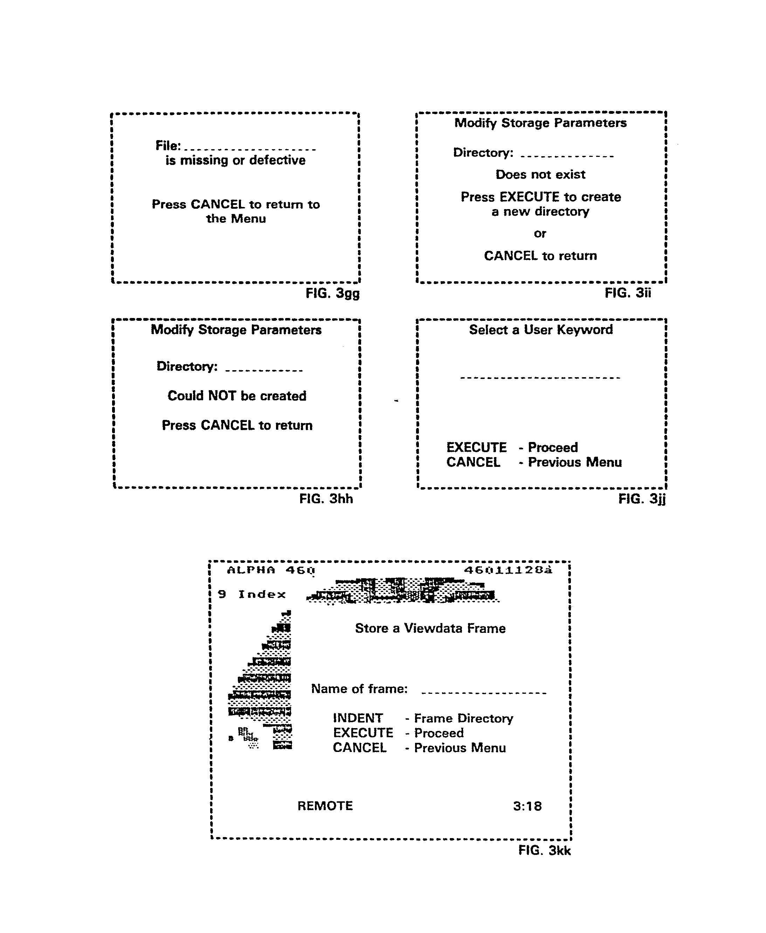

When the subscriber, by appropriate keyboard commands, begins a videotex session, the system enters the unconnected mode. The control module 30 gets and causes display/print module 34 to display the menu shown in Fig. 3a. The same menu also appears at any later time in the session when requested by the subscriber if the system is then in the unconnected mode. The menu offers the subscriber the options of displaying a local frame (i.e. a frame already stored in disk file 42), storing a frame, printing a frame, logging on to remote viewdata (i.e., calling and connecting to a videotex supplier), or performing system functions. At the lower right-hand corner of the menu; instructions are provided to the subscriber. The subscriber elects an option by using the space bar on keyboard 40 to move cursor 43 to the desired option and then by pressing the execute key. Alternatively by pressing the cancel key the subscriber can remove the menu.

If the subscriber selects the option of logging on to a remote videotex supplier, control module 30 next gets and causes display/print module 34 to display the menu in Fig. 3b, which offers the subscriber options of several different videotex suppliers.

The subscriber can elect one of the options (again using the space bar and execute keys as instructed at the

- 17 -

bottom of the menu) and is then presented with the display in Fig. 3c, which gives the telephone numbers, subscriber ID, and password for calling and being connected to the selected videotex supplier. The subscriber may then manually dial the telephone number, the ID is automatically transmitted, and the password is typed in by the subscriber in the spaces provided. Alternatively, the system could be arranged for automatically dialing the selected videotex supplier and delivering the ID and password to effect the connection.

Once the connection is made, the control module enters the connected mode during which it accepts frames from the videotex supplier, delivers them byte-by-byte to the decoder module 32 where they are stored temporarily in the decoder buffer, and directs decoder module 32 to decode them and to cause display/print module 34 to display them on the CRT. Control module also accepts from the keyboard any requests or responses intended for transmission to the videotex supplier and effects the transmission. Thus the subscriber can interact with the videotex supplier in the normal way.

From time to time during operation in the connected mode, the subscriber may wish to temporarily interrupt his current activity. For example, he may wish to change the displayed frame from the one being sent by the remote supplier to one stored in disk file 42. By touching the cancel key, control module 30 will superimpose over the currently displayed

frame, the menu of Fig. 3d, which provides the subscriber with options similar to the menu of Fig. 3a except that the fourth option enables the subscriber to log-off from the remote videotex supplier. The superimposed menu doesn't entirely obscure the current frame, but leaves a portion of it on one side and at the top visible to the subscriber.

If the subscriber elects the log-off option, control module 30 causes the menu of Fig. 3e to be displayed. The subscriber can then confirm his intention to log-off (by pressing execute), after which control module 30 effects the log-off, and the system enters the unconnected mode. The displayed status line (described below) then no longer includes the elapsed connect line.

In either the connected or unconnected modes, the menus of Figs. 3a, 3d give the subscriber the option of storing the currently displayed frame, e.g., a current frame sent from a videotex supplier, in disk file 42.

If that option is chosen, control module 30 causes the menu of Fig. 3f to be displayed. The subscriber may then choose and enter a name for the frame in the space provided, or before doing so may ask to see the frame directory (by pressing the indent key, i.e., program function key #1). In the latter case the control module 30 will cause the display of the menu of Fig. 3g listing the name of the current directory, the disk drive on which it resides, and the names of all local frames stored in disk file 42, or, if the directory is empty, will display a menu which says "The Directory is Empty".

Once the subscriber enters the frame name on the menu of Fig. 3f, control module stores the frame in that directory under that name for later easy retrieval. If the chosen frame name is already being used, control module 30 will cause the menu of Fig. 3h to be displayed to indicate that fact and permit the subscriber to confirm that the current frame should replace the old stored frame of the same name.

Thus the store frame function can be used to store a frame currently being displayed from the videotex supplier or to refile or rename a locally stored frame.

In either the connected or unconnected mode, the menus of Figs. 3a, 3d, also permit the subscriber to display a stored local frame. Thus even when the system is connected to a remote supplier, the subscriber may temporarily interrupt the interactive session, while remaining in the connected mode, and display a stored local frame. When the subscriber elects to display a local frame, the menu of Fig. 3i is displayed. The subscriber then may enter the name of the frame to be displayed, or use the cursor to indicate the frame. The control module 30 then retrieves and causes the requested frame to be displayed.

Likewise, in either the connected or unconnected mode, the subscriber can elect to print a displayed frame. Control

module 30 then causes the menu of Fig. 3j to be displayed, enabling the subscriber to select small or large format print, which governs the overall size of the printed frame. Based on the selection, the control module 30 via display/print module 34 causes printer 38 to print the currently displayed frame.

Finally, in either connected or unconnected mode, the menus of Figs. 3a, 3d, allow the subscriber the option of performing various system functions. When that option is selected, control module 30 causes the menu of Fig. 3k to be displayed and allows the subscriber to select one of four system functions: modify log-on parameters, modify storage parameters, delete stored frame, and select character set.

When the subscriber elects the option of modifying log-on parameters, control module 30 causes the menu of Fig. 3l to be displayed. The subscriber may then elect either to delete a log-on procedure, or to modify or create a log-on procedure.

If a log-on procedure is to be deleted, the menu of Fig. 3m is displayed, enabling the subscriber to select the log-on procedure to be deleted, followed by the menu of Fig. 3n, which confirms the subscriber's wish to delete that procedure.

If the subscriber elects to modify or create a log-on procedure, control module 30 causes the display of a succession of menus, Figs. 3o through 3bb, which enable the subscriber to define or change the values of various parameters needed to establish a connection to a particular videotex supplier, and protocol information needed for proper interaction with the supplier.

In particular, the subscriber can specify or change (Fig. 3o) a short name for the procedure, (e.g. "Prestel" to identify the procedure used to call and connect to the Prestel service); the serial communications port of the subscriber's equipment at which the connection to the modem is made and whether the transmit/receive rate is to be equal in both directions or different (split) for transmission and reception (Fig. 3p); the baud rate for receiving data (Fig. 3q), for transmitting data (Fig. 3r), or for receiving and transmitting data at equal speeds (Fig. 3s); the number of bits per character, the stop bit length, and the parity protocol (Fig. 3t); the error substitute action and character code, and the duplex mode (Fig. 3u); the character set (Fig. 3v); the subscriber identification number and subscriber password (Fig. 3w); the telephone numbers of the videotex supplier (Fig. 3x); the proper log off, back-up frame, repeat frame, and home frame codes for transmission to the particular videotex supplier to control the delivery of frames (Fig. 3y); user keyword names and codes to be described below (Fig. 3z); the choice of displaying or not displaying the procedure as part of the log-on menu (Fig. 3aa); and a confirmation of the storage of the just-defined procedure (Fig. 3bb).

Each frame available from a videotex supplier has an associated identifier assigned by the supplier. For example, the weather forecast might be assigned the code *3097#. The current weather forecast frame is always available by sending that identifier to the supplier. Using the menu of Fig. 3z, the subscriber can enter the code and give it a keyword name, e.g., weather. Available user keywords can be displayed by pressing the dec tab key, i.e., function key #4, which causes the menu of Fig. 3jj to be displayed.

When the subscriber selects the modify storage parameters option of Fig. 3k, control module 30 causes the menu of Fig. 3cc to be displayed, which enables the subscriber to specify the current directory of stored local frames (i.e., the one to which frames are sent for storage and from which stored frames are retrieved) and specify the disk drive on which it is to reside.

When the subscriber selects the delete stored frame option of Fig. 3k, the menu of Fig. 3dd is presented, enabling the subscriber to name the file to be deleted.

When the subscriber selects the select character set option on Fig. 3k, the menu of Fig. 3v is displayed enabling the user to select the character set, i.e., the character font (e.g., English or German) which will be used in displaying the frames.

When certain options are selected by the subscriber
from a menu, the control module causes a display on the screen
of either a message that the requested option has been executed
(the possible execution messages are listed in Fig. 3ee) or an
error message (the possible error messages are listed in Fig.
3ff). In response to the subscriber naming a frame which is
missing or defective, the message in Fig. 3gg is displayed.
When the subscriber names a directory, the control module 30
may, if appropriate, display the error messages of Figs. 3hh
and 3ii.

Referring to Fig. 3kk, whenever a menu is to be shown
to a subscriber while a frame of information is being
displayed, the menu is overlaid on the frame so that portions
of the frame are still visible around the periphery of the
screen. If the subscriber wishes to uncover the entire frame,
he presses the "cancel" key to page through the hierarchy of
menus until a menu at the top of the hierarchy appears.
Pressing "cancel" again will uncover the entire current frame.

Whenever a menu is being displayed, the subscriber may
take different actions by pressing different keys. The
available actions depend on which menu is being displayed.
Some of the available actions are indicated at the lower right
of the frame. Generally the cancel key is used to remove the
present menu and return to the prior menu. If there is no
prior menu the cancel key removes the menu, leaving the

- 24 -

underlying information frame fully displayed. The shift cancel key causes either the main menu (Fig. 3a or Fig. 3d) to be displayed, or causes the videotex session to be terminated. The space bar is used to move the cursor. The execute key is used to execute the option selected by the subscriber. The indent key (function key #1) displays the frame directory. The help key causes a help frame (described below) to be displayed.

When no menu is being displayed the shift cancel key causes the main menu to be displayed.

The actions available to the subscriber at any time can be seen by pressing the help key, which causes a help frame to be displayed.

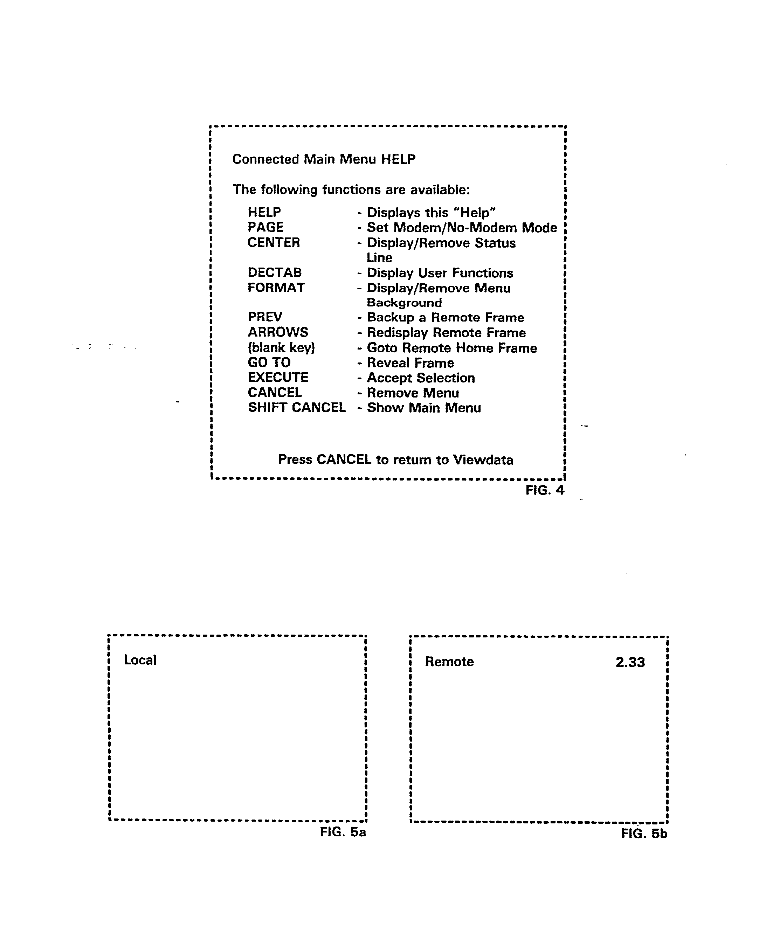

For example, referring to Fig. 4, the help frame which appears if the help key is pressed while the connected main menu is displayed lists the available functions. Successive strokes of the page key (function key #2) causes the modem to be alternately ignored or acknowledged. The center key (function key #3) allows the status line (described below) to be displayed or removed. The format key (function key #6) allows the underlying frame behind an overlaid menu to be displayed or removed.

Referring to Figs. 5a, 5b, the system is capable of displaying a status line with every frame and menu indicating whether the subscriber's equipment is unconnected to the videotex supplier (Fig. 5a), or is connected (Fig. 5b) in which case the elapsed time since the connection was begun is shown at the end of the line. In this way, the subscriber is always alerted to the fact that he is incurring charges while connected, even though he may be working with locally stored frames. The subscriber can choose whether or not to display the status line using the center key.

Different videotex suppliers use different encoding schemes for the data which make up frames of information in their respective systems. Control and decoder modules 30, 32 may be capable of recognizing, for each frame to be decoded, the identity of the videotex system in accordance with which the encoding was done, and must be capable of applying the appropriate decoding rules for the particular frame being decoded.

Each frame stored in disk file 42 includes a frame header of 64 bytes (of which 42 are actually used). The frame header identifies (a) the name assigned to the frame by the subscriber, (b) a unique arbitrary frame identifier, (c) a frame offset indicating the number of bytes from the start of header to the start of the frame data, (d) the number of bytes of data in the frame, (e) the encoding protocol (e.g., ASCII, or Prestel), (f) the language (e.g., English, German), (g) the version of the system software, (h) the version of the encoding protocol, and (i) the videotex supplier. By storing this information as a frame header, decoding, frame retrieval, and file management are made more accurate and efficient.

The interaction between control module 30 and decoder module 32 is accomplished in such a way that each of the modules executes certain procedures when told to do so by the other module.

In particular, the decoder module 32, when told to do so by control module 30, performs any necessary decoder initialization (and returns a flag to the control module 30 if initialization fails); performs any necessary de-initialization (and returns a flag if de-initialization fails); accepts and decodes a single byte (and returns a flag if action is required by the control module, for example if the decoded character represents a request by the videotex supplier to have the subscriber's equipment send back its ID number); causes the display/print module 34 to print the entire contents of the decoder buffer onto the CRT at a displayed frame beginning with the first character in the decoder buffer; causes the display/print module 34 to print selected portions of the decoder buffer onto the CRT to cause a display of selected rows of an information frame; causes display/print module 34 to print the current contents of the display buffer (and returns a flag if the printing failed); and sets the decoder character font (e.g., either English or German).

Conversely, the control module 30, when instructed to do so by decoder module 32, clears the display screen (while

- 27 -

maintaining the status line on the screen); returns to the decoder module an index value indicating the language specified by the frame file header associated with the current local frame; and returns to the decoder module an index value indicating the language specified by the current log-on procedure.

The interaction between the control module 30 and decoder module 32 is also governed by a set of common flags and variables maintained by the decoder module 32. The common flags and variables are a flag set by the control module 30 to indicate that characters sent to the decoder module should be displayed; a flag set by the control module 30 to indicate that "conceal" fields (i.e., portions of the information frames which may need to be concealed, such as answers to quiz questions posed in the frames) should be concealed; an address of the decoder buffer set by the decoder; an address set by the decoder to indicate a number block of the videotex supplier; a flag which is set when a request is made and reset when the request has been satisfied; a value set by the decoder to indicate the videotex supplier's block number subject to modification; and a value set by the decoder to indicate an action requested by the videotex supplier. The action requested by the videotex supplier may be to send the supplier appropriate ID information or to indicate to the control module that the beginning of a remote frame (i.e., one being sent from

- 28 -

the supplier) has been received.                0158767

While the decoding applicable to each type of videotex system must, of course, satisfy the protocol rules for that system, and thus be unique, decoder module 32 is arranged so that decoding for widely different videotex systems can proceed in similar ways. The decoding is accomplished by a table oriented system.

Before a frame of encoded bytes is received for decoding control module 30 causes decoder module 32 to set all positions in the decoder buffer to spaces. The received and decoded characters are then overwritten into the appropriate positions in the decoder buffer. Attribute codes are tagged before being stored to indicate that they relate to an attribute and are not themselves to be displayed.

Whenever a stored frame is to be displayed, decoder module 32 must decode the characters and attributes and deliver the decoded information to display/print module 34.

The decoding for each different protocol is accomplished by means of values stored in tables associated with that protocol. Based on the relevant protocol, the decoder follows a straightforward sequence of steps to decode each byte, using the tables for that protocol to produce a displayable alphanumeric or graphic character for each of the row-and-column positions of the display. The tables are called Frame, State, Character Font, and Transition.

The Frame table corresponds to the decoder buffer and has as many entries as there are positions in the display. Each entry in the Frame table is the encoded byte for the display position corresponding to that entry.

The Character Font table contains the bit-pattern information defining each one of, for example, 172 different characters which may be displayed as single-height and double-height characters, either alphanumeric, contiguous, or separated mosaics.

The State table contains values indicating the state attributes of the display which are applicable at a given time with respect to the display, for example to effect mosaic or alphanumeric, color of foreground, color of background, position in line, and to locate the place in the character table where the relevant character definition is found.

The Transition table has entries, indicating for the current encoded byte and the current state, what action is to be performed and what the next state is to be. For example, one entry in this table would be "put character C into line L, row K (using attributes specified in the State table)". Another would be "display current line from current position to end of line in background color (specified in the State table)".

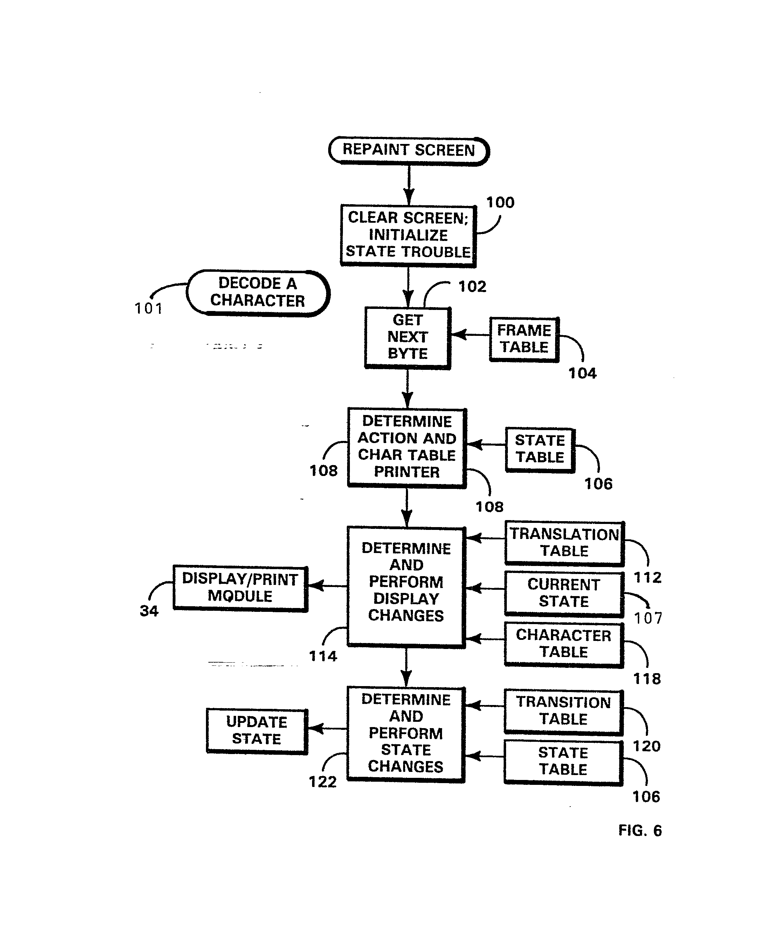

Referring to Fig. 6, the steps performed by decoder module 32 for decoding and displaying a stored frame (i.e., for repainting the screen) begin with clearing all display positions and initializing the state table (100). In the case of a current frame being delivered from the videotex supplier, the decoding steps begin at the decode of a character entry point (101). The decoder module 32 then executes a loop which has the following steps. The next encoded byte is either retrieved (102) from Frame table 104, or delivered directly from control module 30, as the case may be. On the basis of the byte value, the current state 107 and the state table 106, the decoder determines (108) what action is to be taken and if a character is to be displayed, determines the character table pointer (i.e., the location in the character table where the corresponding character definition will be found). Next, using the current state 107, the Transition table 112, and the Character table 118, the decoder determines what changes to the display are needed, if any, and executes them (114), e.g., by delivering the appropriate character definitions from the Character table 118 to the display/print module 34. Then, using the current state 107 and the Transition table 120, the decoder determines what state changes are needed and executes them (122) by modifying the State. Finally, the decoder returns to receive (102) the next byte from the control module, or gets the next byte from the Frame table, as the case may be, repeating the sequence until all encoded bytes in the frame have been processed.

The overall operation of the system is managed by the control module, which is arranged to perform the following routines as required:

(1) initialize the asynchronous port 13 connected to modem 14.

(2) close off at appropriate times the port 13 connected to modem 14.

(3) look to the asynchronous port 13 for a byte received from the videotex supplier and check parity.

(4) look to the input buffer of keyboard 40 for a keyed-in character.

(5) deliver a byte to the asynchronous port 13 for transmission to the videotex supplier.

(6) check keyed-in characters to see if they are valid bytes under the videotex supplier's protocol.

(7) tell the decoder module to stop sending characters to the display so that a help frame can be displayed.

(8) store a current frame in the disk file under a name specified by the subscriber.

(9) print a current frame via display/print module on printer 38.

(10) log onto videotex service.

(11) log off.

(12) store a specified frame having a specified identifier from the videotex supplier.

(13) transmit a frame number or other comments to the videotex supplier, and

(14) display appropriate menus.

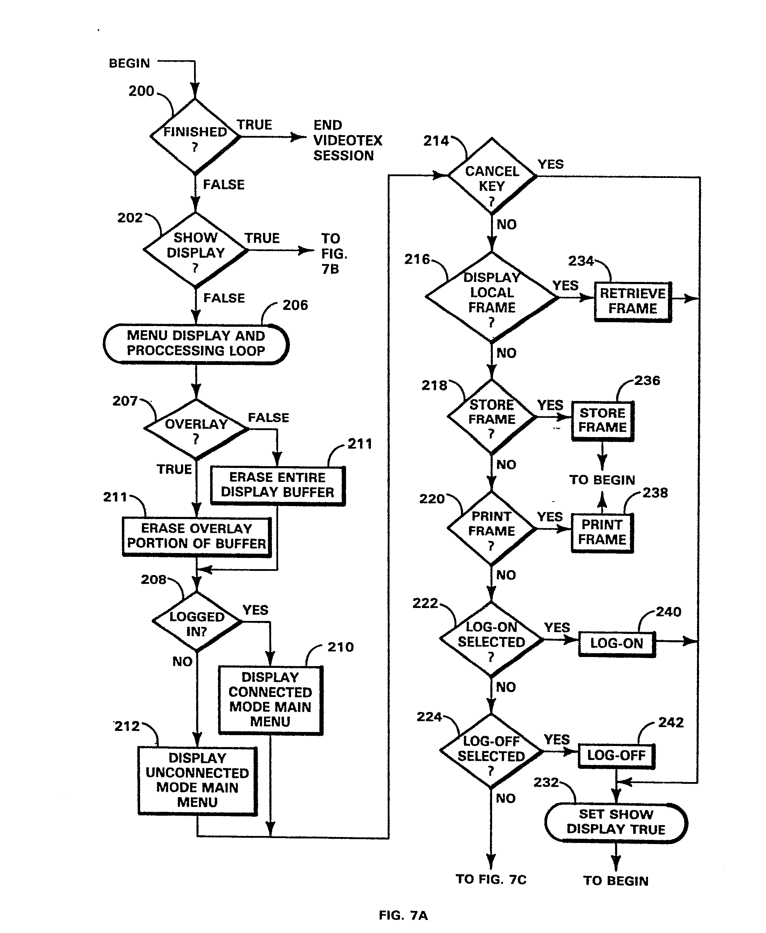

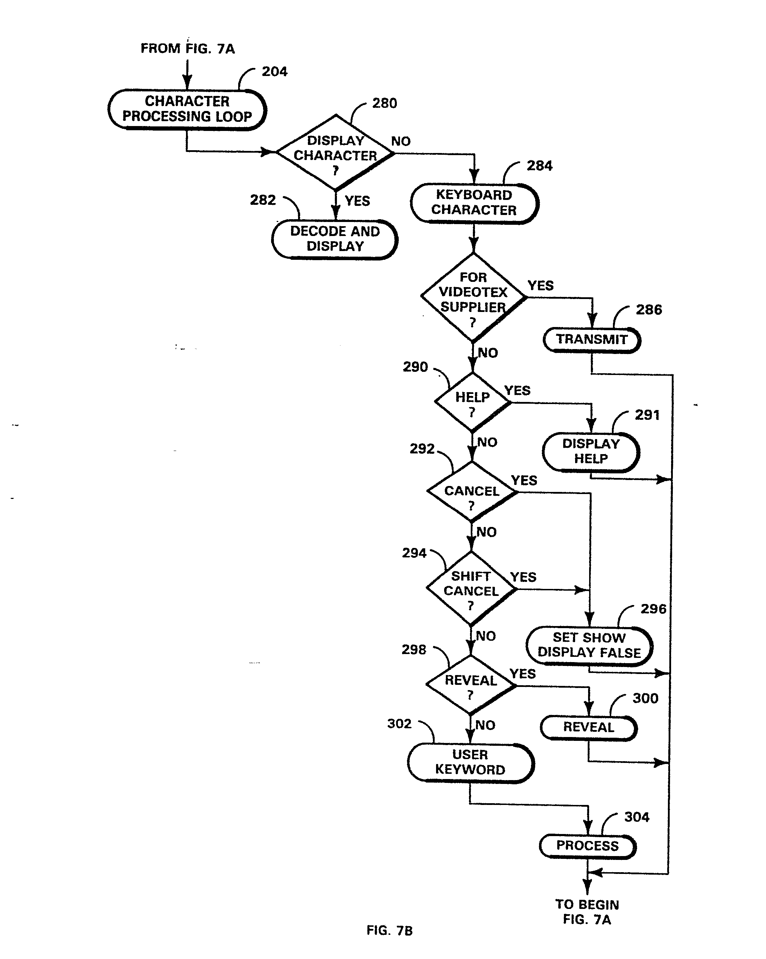

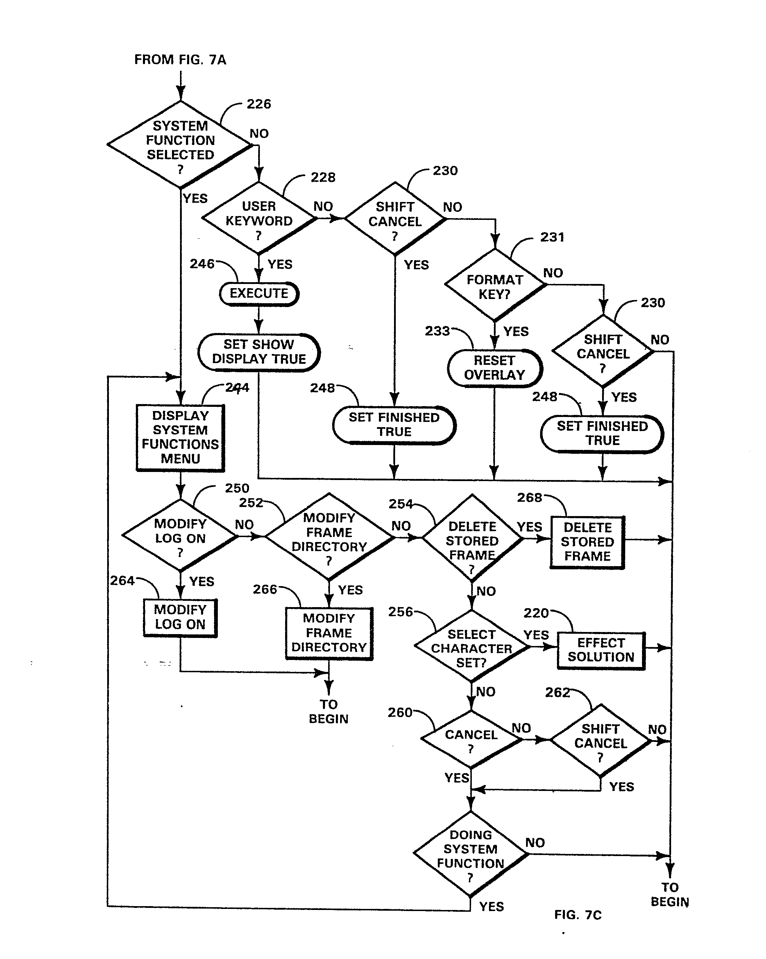

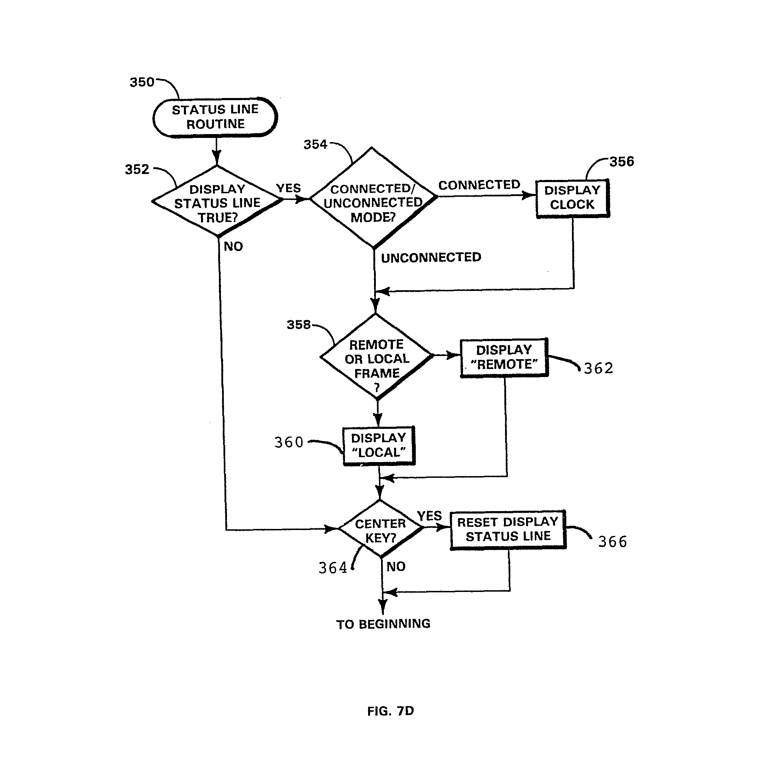

Referring to Fig. 7a, the control module continually cycles through a main processing loop with two embedded loops. The routing of the process through the loops depends on two two-state variables: "finished" and "show-display". When finished (200) is true the control module ends the videotex session. When finished is false but show display (202) is true, the character processing loop 204 is entered. When finished is false and show display is false, the menu display and processing loop 206 is entered.

In the menu display and processing loop, the system first determines (207) whether the menu is to be overlaid on the information frame with some of the frame remaining visible. If so, the control module instructs the decoder to clear only a portion of the decoder (209) buffer to make room for the overlay. Otherwise, the entire decoder buffer is cleared (211). Next, if the system is in the (logged-in) connected mode (208), the connected mode main menu is displayed (210); otherwise the unconnected mode main menu is displayed (212). Then, based on the option chosen by the subscriber (214, 216, 218, 220, 222, 224, 226, 228, 230, 231), the system either (a) sets show display to true (232) and returns to begin (which causes the menu to be removed and the current frame to be displayed), (b) retrieves a local frame (234) to be

- 33 -

displayed and sets show display true. (c) stores a frame (236) and returns to begin. (d) prints a frame (238) and returns to begin. (e) logs on (240) and sets show display true (causing the received frame to be displayed). (f) logs off (242) and sets show display true. (g) displays the system functions menu (244). (h) executes any user functions (246) and sets show display true. (i) sets finished true (248) if the subscriber has pressed shift cancel, or (j) resets the overlay flag to change from an overlaid to a non-overlaid display or vice versa.

If the system functions menu is displayed (244), then based on the option chosen by the subscriber (250, 252, 254, 256, 260, 262) the system, with the subscriber's assistance, either (a) modifies the log-on procedure (264), (b) modifies the frame directory (266), (c) deletes a stored frame (268), (d) effects a character selection (270), or (e) returns to (244) or to begin.

In character processing loop 204, if a character is to be displayed (280), the character is fetched and delivered to the decoder for decoding and display (282). If a keyboard character is to be processed (284), the character is either transmitted to the videotex supplier (286) or is executed as a command. If the help key is pressed (290), the appropriate help menu (291) is displayed. If the cancel or shift cancel is pressed (292, 294), show display is set false (296) causing the system to return to the menu display and processing loop to

- 34 -

display a menu. If the subscriber asks to have hidden information in the frame revealed (298), the information is revealed (300). If the subscriber calls a user function (302), the user function is executed (304).

Referring to Fig. 7d, the status line is controlled by a status line routine (350) which begins by determining (352) whether a display status line flag is true (indicating that the status line is to be displayed). If true, the system determines (354) whether the mode is connected or unconnected. If connected, it causes the display (356) of the elapsed time check at the end of the status line. In the next step, the system determines (358) whether the currently displayed frame is a stored local frame from the disk file or a remote frame being delivered from the supplier and accordingly displays either "LOCAL FRAME" (360) or "REMOTE FRAME" (362) at the beginning of the status line. The system determines (364) whether the center key (function key #3) has been pressed and if so switches (366) the state of the display status line flag to cause the status line to be removed (if previously displayed) or displayed (if previously absent).

Other embodiments are within the following claims. For example, the supplier might be located within the same facility as the subscriber, thus requiring no modem.

What is claimed is:

PATENTANWÄLTE

WUESTHOFF - v. PECHMANN - BEHRENS - GOETZ

EUROPEAN PATENT ATTORNEYS

0158767

EP-58 919

Wang Laboratories, Inc.

D-8000 MÜNCHEN 90
SCHWEIGERSTRASSE 2

TELEFON: (089) 66 20 51
TELEGRAMM: PROTECTPATENT
TELEX: 5 24 070
TELEFAX: VIA (089) 2 71 60 63 (III)

## Claims:

1. Apparatus for locally decoding and displaying frames of digital information received from a central supplier (20, 24), expencially from a videotex supplier, c h a r a c t e r i z e d  by
a port (13) connectable to the central supplier (20, 24) for receiving at least one of the information frames from the central supplier (20, 24),
a display device (36) for locally displaying at least one of the information frames received from the central supplier (20, 24),
a storage device (42) for locally storing, after it has been displayed, as a stored frame for later redisplay, at least one of the information frames received from the central supplier (20, 24), and
a processor (30, 32, 34) connected to be responsive to the port (13) and the storage device (42) and comprising
display means (36) for displaying, while the port (13) is connected to the central supplier (20, 24), an indication that the port (13) is connected.

2. The apparatus of claim 1,
c h a r a c t e r i z e d  in that
the means (36) for displaying is further arranged to display an indication of the expense entailed in the connection.

0158767

3.    The apparatus of claim 1 or 2,
c h a r a c t e r i z e d   in that
the means (36) for displaying is further arranged to display
the time which has elapsed during the period since the port
(13) was most recently connected.

4.    The apparatus of claim 2 or 3,
c h a r a c t e r i z e d   in that
the indication of expense is displayed on the display device
(36) simultaneously while an information frame is being
displayed.

5.    The apparatus of any of claima 1 to 4,
c h a r a c t e r i z e d   in that
the processor (30, 32, 34) further comprises
     means (30, 34) for enabling the user to selectively
either display or not display the indication that the port
(13) is connected.

6.    The apparatus of any of claims 1 to 5,
c h a r a c t e r i z e d   in that
the means (36) for displaying is further arranged to display
an indication of whether the information frame being
displayed is a stored frame from the storage device (42).

7.    The apparatus of claim 6 ,
c h a r a c t e r i z e d   in that
the processor (30, 32, 34) further comprises
     means (30, 34) for enabling the user to selectively
either display or not display the indication of whether the
information frame being displayed is a stored frame from the
storage device (42).

8.    The apparatus of any of claims 1 to 7,
c h a r a c t e r i z e d   in that
the means (36) for displaying is further arranged to display,
while the port (13) is unconnected to the central supplier
(20, 24), an indication that the port (13) is unconnected.

9.    The apparatus of any of claims 1 to 8 further comprising
a data entry device (40) for enabling the entry of data into
the apparatus, the data including commands representing
actions to be taken with respect to the information frames, c
h a r a c t e r i z e d   in that
the processor (30, 32, 34) further comprises

means (30, 34, 37) for delivering to the display device
(36) at least one menu frame for visually indicating possible
actions which may be taken with respect to the information
frames, including the actions of switching back and forth
between displaying the information frames, as they are
received from the supplier (20, 24), and displaying stored
frames from the storage device (42), and

means (30) responsive to the data entry device (40) for
accepting and executing entered commands corresponding to the
possible actions.

10.   Apparatus for locally decoding and displaying frames of
digital information received from a videotex supplier (20,
24),
c h a r a c t e r i z e d   by

a port (13) connectable to the central supplier (20, 24)
for receiving at least one of the information frames from the
supplier (20, 24),

a display device (36) for displaying at least one of the
information frames received from the supplier (20, 24), and

a processor (30, 32, 34) comprising means (34, 37) for delivering to the display device
(36) at least one menu frame for visually indicating possible actions which may be taken
while an information frame received from the
supplier (20, 24) is being displayed on the display
device (36), and
means (30, 32, 34, 37) for visually overlaying the
menu frame over the displayed information frame so
that at least a portion of the displayed
information frame is displayed simultaneously with
the menu frame.


11.   The apparatus of claim 10,
c h a r a c t e r i z e d  in that
the processor (30, 32, 34) further comprises
     a data entry device (40) for enabling the entry of data
into the apparatus, including commands to cause the processor
(30, 32, 34) to selectively either overlay the menu over the
displayed frame, or to display the menu without any underlying display of any portion of the previously displayed
information frame.


12.   The apparatus of claim 10 or 11,
c h a r a c t e r i z e d  in that
the possible actions include actions to be taken with respect
to the underlying information frame.


13.   The apparatus of claim 12,
c h a r a c t e r i z e d  in that
one action is the storage of the underlying displayed
information frame.


14.   Apparatus for obtaining access via a switched
communications network (18) to a central supplier (20, 24),
especially a videotex supplier, of frames of digital
information for obtaining said frames to be decoded and
visually displayed locally,
c h a r a c t e r i z e d  by

- 5 -                                    0158767

means (13, 14, 16) for delivering to the central supplier (20, 24) via the network stored coded information required by the central supplier (20, 24) as a condition to allowing access to the central supplier (20, 24),
    a display device (36) for displaying the frames of digital information,
    a data entry device (40) for enabling the entry of data into the apparatus, including commands, and
    a processor (30, 32, 34) comprising
        menu means (30, 34, 37) for sending to the display device (36) a menu frame identifying the central supplier (20, 24) as being accessible, and
        log-on means (30, 34, 37, 32) responsive to the data entry device (40) for accepting and executing an entered command to obtain access to the supplier (20, 24), by triggering the means (13) for delivering to send the coded information.

15.   The apparatus of claim 14,
c h a r a c t e r i z e d   in that
the coded information delivered to the supplier (20, 24) includes a subscriber identifier.

16.   The apparatus of claim 14 or 15,
c h a r a c t e r i z e d   by
means (42) for holding protocol information about a protocol specified by the supplier (20, 24) and governing the information frames of the supplier (20, 24).

17.   The apparatus of claim 16,
c h a r a c t e r i z e d   in that
each information frame comprises a collection of multiple-bit bytes and the means (42) for holding is arranged to hold protocol information which includes the number of bits in each byte.

18.  The apparatus of claim 16,
c h a r a c t e r i z e d  in that
the means (42) for holding is arranged to hold protocol
information which includes a table of commands each
associated with an instruction specified by the supplier (20,
24) for retrieving information frames from the supplier (20,
24), each command corresponding to a key on the data entry
device (40),
and in that the processor (30, 32, 34) further includes means
(30) responsive to the data entry device (40) for sending to
the supplier (20, 24) in response to the pressing of a key,
the instruction associated with the command corresponding to
the pressed key.

19.  The apparatus of any of claims 16 to 18,
c h a r a c t e r i z e d  in that
the specified instructions include instructions to retrieve
the prior information frame, to repeat the presently
retrieved information frame, to log off and to go to the home
frame.

20.  The apparatus of claim 14,
c h a r a c t e r i z e d  in that
the means (13, 14, 16) for delivering coded information
includes the information for a plurality of central suppliers
(20, 24) each requiring its own coded information.

21.  The apparatus of claim 14 or 20,
c h a r a c t e r i z e d  in that
the processor (30, 32, 34) further comprises means (30) for
specifying and updating, by data entered through the data
entry device (40), the coded information to be delivered to
the supplier (20, 24) when access to the supplier is
commanded.

- 7 - 0158767

22. The apparatus of any of claims 16 to 21,
c h a r a c t e r i z e d  in that
the processor (30, 32, 34) further comprises means (30) for
specifying and updating the protocol information held in the
means for holding.

23. The apparatus of claim 21,
c h a r a c t e r i z e d  in that
the menu sent by the menu means (30, 34, 37) identifies
at least a plurality of the suppliers (20, 24), and the
log-on means (30, 34, 37, 32) is responsive to the data entry
device (40) for accepting and executing an entered command to
obtain access to one of the suppliers (20, 24) by triggering
the means (13) for delivering to send to that one supplier
(20, 24) the coded information required by it.

24. Apparatus for retrieving and decoding selected frames of
information from a central videotex supplier (20, 24) of such
information frames, each information frame having an
associated unique identifier assigned by the supplier (20,
24) for retrieving the frame,
c h a r a c t e r i z e d  by
a display device (36) for displaying the information
frames,
storage means (42) for storing the identifier and a
unique keyword selected by the operator and associated with
the identifier,
menu means (30, 34, 37) for displaying on the display
device (36) a menu frame containing the keyword,
data entry means (40) for entering into the apparatus a
request for the retrieval of a selected information frame by
moving a cursor (43) to the keyword associated with the
selected information frame, and

a processor (30, 32, 34) responsive to the data entry means (40) for retrieving the information frame in response to the entry of the request by transmitting the associated identifier to the supplier (20, 24).

25.  The apparatus of claim 24,
c h a r a c t e r i z e d  in that
the data entry means (40) is further arranged for entering the request by typing in the keyword.

26.  The apparatus of claim 24 or 25,
c h a r a c t e r i z e d  in that
the processor (30, 32, 34) comprises means (30) for enabling specification and updating of the keywords appearing on the menu frame and the identifier associated with each keyword by commands entered through the data entry device (40).

27.  Apparatus for locally storing and decoding frames of digital information received from a central videotex supplier (20, 24),
c h a r a c t e r i z e d  in that
     a port (13) connectable to the central supplier (20, 24) for receiving at least one of the information frames from the central videotex supplier (20, 24),
     a display device (36) for locally displaying at least one of the information frames received from the central videotex supplier (20, 24),
     a storage device (42) for locally storing, after it has been displayed, as a stored frame for later redisplay, at least one of the information frames received from the central supplier (20, 24),
     a data entry device (40) for enabling the entry of data into the apparatus, and

a processor (30, 32, 34) comprising

means (30) for accepting from the data entry device (40) a name specified by the subscriber to be associated with a particular displayed information frame,

means (30) for storing the particular information frame in the storage device (42) together with the associated name, and

means (30, 32, 34, 37)  for retrieving the particular information frame from the storage device (42) in response to entry through the data entry device (40) of a command corresponding to the name specified for that frame.


28.  The apparatus of claim 27,
c h a r a c t e r i z e d  in that
the processor (30, 32, 34) further comprises

means (30) for grouping information frames into directories, and

means (30) for accepting from the date entry device (40) commands designating the directory in which a particular displayed frame is to be stored.


29.  The apparatus of claim 27,
c h a r a c t e r i z e d  in that
for a plurality of central videotex suppliers (20, 24) the processor (30, 32, 34) further comprises

means (30) for accepting from the data entry device (40) commands for storing in a single directory frames received from different suppliers (20, 24).


30.  The apparatus of claim 28,
c h a r a c t e r i z e d  in that
the processor (30, 32, 34) further comprises

means (37) for displaying on the display device (36) a menu listing by name the information frames stored in a given directory, and means (30) for accepting from the data entry
device (40) a command corresponding to the name of an
information frame included in the menu for retrieval from the
directory.

31.   The apparatus of claim 30,
c h a r a c t e r i z e d   in that
the command is entered by steps which include moving a cursor
(43) to the name of the information frame on the menu.

32.   The apparatus of claim 30,
c h a r a c t e r i z e d   in that
the command is entered by steps which include typing the name
of the information frame on the data entry device (40).

33.   Apparatus for decoding and printing frames of digital
information received from a central videotex supplier (20,
24),
c h a r a c t e r i z e d   by
      a port (13) connectable to the central supplier (20, 24)
for receiving at least one of the information frames from the
central supplier (20, 24),
      a printing device (38) for locally printing at least one
of the information frames received from the central supplier
(20, 24) and,
      a processor (30, 32, 34) comprising
      means (34) for delivering to the printer (38) digital
information corresponding to an information frame to be
printed, and
      means (34) for configuring the digital information to
cause the printed information frame to be of a selectable
overall size.

34. The apparatus of claim 33,
c h a r a c t e r i z e d  in that
    it comprises a data entry device (40) for enabling the
entry of data into the apparatus, and
    in that the processor (30, 32, 34) further comprises
    means (30) for accepting from the data entry device (40)
commands corresponding to the different selectable overall
sizes.

35. Apparatus for processing and decoding frames of
information received from a central videotex supplier (20,
24), different information frames comprising characters
intended to be displayed by means of different characters
sets,
c h a r a c t e r i z e d  by
    a port (13) connectable to the videotex supplier (20,
24) for receiving the information frames,
    a display device (36) for displaying the received
information frames,
    a storage device (42) for storing character font
information corresponding to the different characters sets,
    a data entry device (40) for entering data into the
apparatus, and
    a processor (30, 32, 34) comprising
    means (30) for accepting from the data entry device (40)
commands each corresponding the display of information frames
according to one of the different character sets, and
    means (30, 32) for executing a command by reference to
the stored font information corresponding to the character
set specified by that command.

36. The apparatus of claim 35,
c h a r a c t e r i z e d  in that
the character sets include an English character set and a
German character set.

37. Apparatus for locally decoding a stream of bytes representing a frame of information received from a videotex supplier (20, 24),
c h a r a c t e r i z e d  by
        means (30) for receiving each byte in turn for decoding,
        means (42) for storing a table of entries each indicating what action is to be performed with respect to each byte based on the identity of the byte and on the current state of the decoder, and
        means (32) for decoding each byte by finding the entry in the table corresponding to the action to be performed and thereafter performing that action.

38. The apparatus of claim 37,
c h a r a c t e r i z e d  by
means (30) for updating the current state of the decoder, after each byte is decoded, in accordance with the current state and the identity of the decoded byte.

39. Apparatus for locally processing and decoding frames of information received from central videotex suppliers (20, 24), different frames being encoded in accordance with different protocols,
c h a r a c t e r i z e d  by
        means (42) for locally storing the information frames,
        means (36) for locally displaying the frames,
        means (32) for decoding the locally stored frames before they are displayed, and
        means (30) for tagging each stored frame with a header indicating the protocol used for encoding the frame,
        the means (32) for decoding being arranged to decode each frame in accordance with the protocol indicated by the header of the frame.

1028

**FIG. 1**

**FIG. 2**

EP-58 919
Wang Laboratories, Inc.

```
Select Function - Unconnected Mode

     _ Display local frame
    ▄ Store frame
43 _ Print frame
     _ Log-on to remote viewdata
     _ Perform system functions

  EXECUTE   - Proceed
  SPACE BAR - Move Cursor
  CANCEL    - Remove Menu
```
FIG. 3a

```
     Log-off from Viewdata

  Press EXECUTE to log-off
       from Viewdata

          or

 CANCEL to return to the menu

  EXECUTE - Log-off
  CANCEL  - Previous Menu
```
FIG. 3e

```
   Select a Log-on Proceedure

          _ Prestel

          _ BTX

          _ NPLPS

          _ Other

  EXECUTE    - Proceed
  SPACE BAR - Move Cursor
  CANCEL     - Remove Menu
```
FIG. 3b

```
     Store a Viewdata frame


 Name of Frame:  _ _ _ _ _ _ _ _ _ _

   INDENT   - Frame Directory
   EXECUTE - Proceed
   CANCEL  - Previous Menu
```
FIG. 3f

```
      Log-on to Viewdata

  Please manually dial Viewdata -

 Telephone Numbers:
 - - - - - - - - - - -   - - - - - - - - - - -
 - - - - - - - - - - -   - - - - - - - - - - -
 - - - - - - - - - - -
 ID:            Password:
 - - - - - - - - - - -   - - - - - - - - - - -

     CANCEL - Return to Menu
```
FIG. 3c

```
   Store Local Frame (Page 1)
 Drive: _  Directory: /_ _ _ _ _ _ _ _

   filename001      filename008
   filename002      filename009
   filename003      filename010
   filename004      filename011
   filename005      filename012
   filename006      filename013
   filename007      filename014

   NEXT    - Next Directory Page
   CANCEL - Previous Menu
```
FIG. 3g

```
  Select Function - Connected Mode

     _ Display local frame
     _ Store frame
     _ Print frame
     _ Log-off remote viewdata
     _ Perform system functions

  EXECUTE   - Proceed
  SPACE BAR - Move Cursor
  CANCEL    - Remove Menu
```
FIG. 3d

```
     Store a Viewdata Frame

 Frame:
 - - - - - - - - - - - - - - - - - - - - - - - - - - -
      Already exists

 Press EXECUTE to Overwrite
    the existing frame

          or

 CANCEL to return to the Menu
```
FIG. 3h

3/12

0158767

```
┌─────────────────────────────────────┐
│     Display Local Frame (Page 1)     │
│ Drive: _  Directory: /.............  │
│                                      │
│     ..........        filename008    │
│   filename001         filename009    │
│   filename002         filename010    │
│   filename003         filename011    │
│   filename004         filename012    │
│   filename005         filename013    │
│   filename006         filename014    │
│                                      │
│   NEXT    - Next Directory Page      │
│   CANCEL - Previous Menu             │
└─────────────────────────────────────┘
                              FIG. 3i
```

```
┌─────────────────────────────────────┐
│            Print Frame               │
│                                      │
│      _ Small Format Print            │
│                                      │
│      _ Large Format Print            │
│                                      │
│                                      │
│   EXECUTE    - Proceed               │
│   SPACE BAR - Move Cursor            │
│   CANCEL     - Remove Menu           │
└─────────────────────────────────────┘
                              FIG. 3j
```

```
┌─────────────────────────────────────┐
│      Select a System Function        │
│  _ Modify Log-on parameters          │
│  _ Modify storage parameters         │
│  _ Delete stored frame               │
│  _ Select character set              │
│     EXECUTE    - Proceed             │
│     SPACE BAR - Move Cursor          │
│     CANCEL     - Remove Menu         │
└─────────────────────────────────────┘
                              FIG. 3k
```

```
┌─────────────────────────────────────┐
│      Define a Log-on Procedure       │
│  Select a Function:                  │
│                                      │
│  _ Modify/Create Procedure           │
│  _ Delete Procedure                  │
│                                      │
│     EXECUTE    - Proceed             │
│     SPACE BAR - Move Cursor          │
│     CANCEL     - Previous Menu       │
└─────────────────────────────────────┘
                              FIG. 3l
```

```
┌─────────────────────────────────────┐
│      Delete a Log-on Procedure       │
│                                      │
│            _ Prestel                 │
│            _ BTX                      │
│            _ NPLPS                    │
│            _ Other                    │
│                                      │
│   EXECUTE    - Proceed               │
│   SPACE BAR - Move Cursor            │
│   CANCEL     - Previous Menu         │
└─────────────────────────────────────┘
                              FIG. 3m
```

```
┌─────────────────────────────────────┐
│      Delete a Log-on Procedure       │
│                                      │
│  Procedure: _____      │
│                                      │
│     Press EXECUTE to Delete          │
│           the Procedure              │
│                                      │
│              or                      │
│                                      │
│   CANCEL to return to the Menu       │
└─────────────────────────────────────┘
                              FIG. 3n
```

```
┌─────────────────────────────────────┐
│      Define a Log-on Procedure       │
│            _ Prestel                 │
│            _ BTX                      │
│            _ NPLPS                    │
│            _ Other                    │
│            _ ----------              │
│   EXECUTE    - Proceed               │
│   SPACE BAR - Move Cursor            │
│   CANCEL     - Previous Menu         │
└─────────────────────────────────────┘
                              FIG. 3o
```

```
┌─────────────────────────────────────┐
│      Define a Log-on Procedure       │
│  Serial Communications Port:         │
│     _ Port 1        _ Port 4         │
│     _ Port 2                         │
│     _ Port 3                         │
│  Transmit/Receive Rate:              │
│    _ Equal Speed   _ Split Speed     │
│     EXECUTE    - Proceed             │
│     SPACE BAR - Move Cursor          │
│     CANCEL     - Previous Menu       │
└─────────────────────────────────────┘
                              FIG. 3p
```

```
.--------------------------------------.
|       Define a Log-on Procedure      |
|                                      |
|  Receive Data Rate:                  |
|                                      |
| _ 50    _ 150   _ 1800  _ 4800       |
| _ 75    _ 300   _ 2000  _ 7200       |
| _ 110   _ 600   _ 2400  _ 9600       |
| _ 134.5 _ 1200  _ 3600  _ 19200      |
|                                      |
|    EXECUTE    - Proceed              |
|    SPACE BAR - Move Cursor           |
|    CANCEL     - Previous Menu        |
'--------------------------------------'
```
FIG. 3q

```
.--------------------------------------.
|       Define a Log-on Procedure      |
|                                      |
|  Transmit Data Rate:                 |
|                                      |
| _ 50    _ 150   _ 1800  _ 4800       |
| _ 75    _ 300   _ 2000  _ 7200       |
| _ 110   _ 600   _ 2400  _ 9600       |
| _ 134.5 _ 1200  _ 3600  _ 19200      |
|                                      |
|    EXECUTE    - Proceed              |
|    SPACE BAR - Move Cursor           |
|    CANCEL     - Previous Menu        |
'--------------------------------------'
```
FIG. 3r

```
.--------------------------------------.
|       Define a Log-on Procedure      |
|                                      |
|  Transmit/Receive Data Rate:         |
|                                      |
| _ 50    _ 150   _ 1800  _ 4800       |
| _ 75    _ 300   _ 2000  _ 7200       |
| _ 110   _ 600   _ 2400  _ 9600       |
| _ 134.5 _ 1200  _ 3600  _ 19200      |
|                                      |
|    EXECUTE    - Proceed              |
|    SPACE BAR - Move Cursor           |
|    CANCEL     - Previous Menu        |
'--------------------------------------'
```
FIG. 3s

```
.--------------------------------------.
|       Define a Log-on Procedure      |
|                                      |
|  Number of data bits:                |
|      _ 5  _ 6  _ 7  _ 8              |
|                                      |
|  Stop bit length:                    |
|      _ 1  _ 1.5  _ 2                 |
|                                      |
|  Parity:                             |
|   _ None _ Even _ Odd _ Ignore       |
|                                      |
|    RETURN     - Next Field           |
|    EXECUTE    - Proceed              |
|    SPACE BAR - Move Cursor           |
|    CANCEL     - Previous Menu        |
'--------------------------------------'
```
FIG. 3t

```
.--------------------------------------.
|       Define a Log-on Procedure      |
|                                      |
|  Error Substitute Action:            |
|    _ Enable _ Pass _ Delete          |
|                                      |
|  Error Substitute Character Code:    |
|    127                               |
|                                      |
|  Duplex:                             |
|    _ Full   _ Half                   |
|                                      |
|    RETURN     - Next Field           |
|    EXECUTE    - Proceed              |
|    SPACE BAR - Move Cursor           |
|    CANCEL     - Previous Menu        |
'--------------------------------------'
```
FIG. 3u

```
.--------------------------------------.
|       Define a Log-on Procedure      |
|                                      |
|  Character Set:                      |
|                                      |
|          _ English                   |
|                                      |
|          _ German                    |
|                                      |
|    EXECUTE    - Proceed              |
|    SPACE BAR - Move Cursor           |
|    CANCEL     - Previous Menu        |
'--------------------------------------'
```
FIG. 3v

```
.--------------------------------------.
|       Define a Log-on Procedure      |
|                                      |
|  Identification number:              |
|                                      |
|    -------------------------         |
|                                      |
|  Password (Optional):                |
|                                      |
|    -------------------------         |
|                                      |
|    RETURN     - Next Field           |
|    EXECUTE    - Proceed              |
|    CANCEL     - Previous Menu        |
'--------------------------------------'
```
FIG. 3w

```
.--------------------------------------.
|       Define a Log-on Procedure      |
|                                      |
|      Telephone Numbers:              |
|                                      |
|    -------------------------         |
|    -------------------------         |
|    -------------------------         |
|    -------------------------         |
|    -------------------------         |
|    -------------------------         |
|                                      |
|    RETURN     - Next Field           |
|    EXECUTE    - Proceed              |
|    CANCEL     - Previous Menu        |
'--------------------------------------'
```
FIG. 3x

---

```
+-------------------------------------+
|      Define a Log-on Procedure      |
|                                     |
| Logoff Code:          _____   |
|                                     |
| Backup Frame Code:_____     |
|                                     |
| Repeat Frame Code: _____     |
|                                     |
| Home Frame Code:  _____      |
|                                     |
|    EXECUTE    - Proceed             |
|    SPACE BAR - Move Cursor          |
|    CANCEL    - Previous Menu        |
+-------------------------------------+
```
FIG. 3y

```
+-------------------------------------+
|      Define a Log-on Procedure      |
|                                     |
|     Define User Keywords 1-8        |
|                                     |
| Name:              Code:            |
|                                     |
| _____   _____      |
| _____   _____      |
| _____   _____      |
| _____   _____      |
| _____   _____      |
| _____   _____      |
| _____   _____      |
| _____   _____      |
|                                     |
|    EXECUTE    - Proceed             |
|    CANCEL     - Previous Menu       |
+-------------------------------------+
```
FIG. 3z

```
+-------------------------------------+
|      Define a Log-on Procedure      |
|                                     |
| _ Display on Log-on Menu            |
|                                     |
| _ Do Not Display on Log-on Menu     |
|                                     |
|    EXECUTE    - Proceed             |
|    SPACE BAR - Move Cursor          |
|    CANCEL    - Previous Menu        |
+-------------------------------------+
```
FIG. 3aa

```
+-------------------------------------+
|      Define a Log-on Procedure      |
|                                     |
| Procedure:  _____        |
|                                     |
|    Press EXECUTE to Store           |
|        the procedure                |
|                                     |
|            or                       |
|                                     |
| Cancel to return to the Menu        |
+-------------------------------------+
```
FIG. 3bb

```
+-------------------------------------+
|      Modify Storage Parameters      |
|                                     |
|          Drive: _                   |
|                                     |
|    Directory:  / _____        |
|                                     |
|    EXECUTE    - Proceed             |
|    CANCEL     - Previous Menu       |
+-------------------------------------+
```
FIG. 3cc

```
+-------------------------------------+
|     Delete Local Frame (Page 1)     |
|                                     |
| Drive: _   Directory: / _____ |
|                                     |
|   _____      filename008      |
|   filename001      filename009      |
|   filename002      filename0010     |
|   filename003      filename0011     |
|   filename004      filename0012     |
|   filename005      filename0013     |
|   filename006      filename0014     |
|                                     |
|   NEXT    - Next Directory Page     |
|   CANCEL - Previous Menu            |
+-------------------------------------+
```
FIG. 3dd

```
+-------------------------------------+
|     Save Frame was Successful       |
|     Delete Frame was Successful     |
|  Change Directory was Successful    |
|     Modify Log-on was Successful    |
|     Delete Log-on was Successful    |
|   Change Char. Set was Successful   |
+-------------------------------------+
```
FIG. 3ee

```
+-------------------------------------+
|     The disk is write-protected     |
|     The file could not be found     |
|     The disk drive is not ready     |
|          The disk is full           |
|     A disk write error occurred     |
|     A disk read error occurred      |
|   An unknown disk error occurred    |
|      The disk directory is full     |
|    The disk directory is missing    |
|      A Printer Failure Occurred     |
|    Serial I/O hardware is missing   |
|    Not enough memory is available   |
|                                     |
|  Display Frame was unsuccessful -   |
|   Store Frame was unsuccessful -    |
|    'Config.vsp' file read failed -  |
|   Delete Frame was unsuccessful -   |
|      Modify was unsuccessful -      |
|  Read Directory was unsuccessful -  |
|                                     |
|   Print Frame was unsuccessful -    |
|     Log-on was unsuccessful -       |
+-------------------------------------+
```
FIG. 3ff

File: _____
is missing or defective

Press CANCEL to return to
the Menu

FIG. 3gg

---

Modify Storage Parameters

Directory: _____

Does not exist

Press EXECUTE to create
a new directory

or

CANCEL to return

FIG. 3ii

---

Modify Storage Parameters

Directory: _____

Could NOT be created

Press CANCEL to return

FIG. 3hh

---

Select a User Keyword

_____

EXECUTE   - Proceed
CANCEL    - Previous Menu

FIG. 3jj

---

ALPHA 460                              46011128à

9 Index

Store a Viewdata Frame

Name of frame:   _____

INDENT     - Frame Directory
EXECUTE    - Proceed
CANCEL     - Previous Menu

REMOTE                                 3:18

FIG. 3kk

```
Connected Main Menu HELP

The following functions are available:
         HELP            - Displays this "Help"
         PAGE            - Set Modem/No-Modem Mode
         CENTER          - Display/Remove Status
                           Line
         DECTAB          - Display User Functions
         FORMAT          - Display/Remove Menu
                           Background
         PREV            - Backup a Remote Frame
         ARROWS          - Redisplay Remote Frame
         (blank key)     - Goto Remote Home Frame
         GO TO           - Reveal Frame
         EXECUTE         - Accept Selection
         CANCEL          - Remove Menu
         SHIFT CANCEL    - Show Main Menu


         Press CANCEL to return to Viewdata
```

FIG. 4

```
Local
```

FIG. 5a

```
Remote                    2.33
```

FIG. 5b

8112

0158767

FIG. 6

FIG. 7A

0158767

FIG. 7B

0158767

FIG. 7C

12/12

0158767

FIG. 7D